(19) Europäisches Patentamt
European Patent Office
Office européen des brevets

(11) **EP 2 605 150 A1**

(12) **EUROPEAN PATENT APPLICATION**

(43) Date of publication:
**19.06.2013 Bulletin 2013/25**

(51) Int Cl.:
**G06F 17/27** (2006.01)

(21) Application number: **11306693.0**

(22) Date of filing: **16.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Presans**
  **91400 Orsay (FR)**
• **Ecole Polytechnique**
  **91120 Palaiseau (FR)**
• **Centre National de la Recherche Scientifique**
  **75016 Paris (FR)**

(72) Inventors:
• **Plachouras, Vassilis**
  **15234 Chalandri (GR)**
• **Rivière, Matthieu**
  **92200 Neuilly (FR)**
• **Meige, Albert**
  **75014 Paris (FR)**
• **Vazirgiannis, Michalis**
  **91120 Palaiseau (FR)**

(74) Representative: **Kingolo, Alain et al**
  **Pontet Allano & Associés**
  **25, rue Jean Rostand**
  **Parc Orsay Université**
  **91893 Orsay Cedex (FR)**

(54) **Method for identifying the named entity that corresponds to an owner of a web page**

(57)    Method for identifying the name of an owner of a web page, the said method comprising the steps of: applying a named entity recognizer (NER) to extract names appearing on the said web page and creating entities $e$ that are of a type $t(e)$ where $t(e) \in \{PERSON, FNAME, MNAME, LNAME\}$, that are of a confidence $c$ (e) and that have a string representation $s(e)$; defining sets $S(t, str)$ to be sets of entities $e$ of type $t$ and string representation $s(e)$ equal to $str$: $S(t, str) = \{e | t(e) = t \wedge s(e) = str\}$ ; computing for each set $S(t, str)$ a score; selecting the entity that belongs to the set that has the maximum score.

FIG. 2

EP 2 605 150 A1

**Description**

The invention relates to a method for identifying the named entity that corresponds to an owner of a Web page.

Such methods can be applied for example to expert search, where users search for people having relevant expertise to their information need. Expert search typically requires a database of references to academic institutions, researchers and publications. Obtaining such high-quality databases can be achieved with a method that identifies a named entity that corresponds to a particular Web page, for example, a home-page or an institutional staff Web page.

Existing works learn models for identifying the name of the owner of a Web page and use heuristics about the structure of the Web page and the positioning of information.

Another type of existing works learns a model for extracting the relevant information for a specific type of Web pages, such as home pages.

Therefore, existing works rely on a particular named entity recognition model and hence do not allow for the use of any method that detects the named entities with a required granularity, that is, given names, last names and middle names.

Second, existing works depend on language-specific resources and therefore can't be applied to a wide range of Web pages.

An object of the present invention is to overcome drawbacks of prior art by providing a method for identifying the named entity that corresponds to the owner of a web page that does not depend on a particular Named Entity Recognition Model (NER). Another object of the present invention is to provide such a method that allows for the use of any particular method that detects the named entities with the said required granularity. Another object of the present invention is to provide such a method that does not depend on language-specific resources. Another object of the present invention is to provide such a method that can be applied to a wide range of Web pages. Another object of the present invention is to provide such a method that does not assume having any information about the names *a priori,* ie that only need to have information on names for the training data.

In at least preferred embodiments, the present invention provides with a method for identifying the name of an owner of a web page, the said method comprising the steps of:

- applying a named entity recognizer (NER) to extract names appearing on the said web page and creating entities *e* that are of a type *t(e)* where *t(e)* $\in$ {*PERSON, FNAME, MNAME, LNAME*}, that are of a confidence *c(e)* and that have a string representation s(e),
- defining sets *s(t,str)* to be sets of entities *e* of type *t* and string representation s(e) equal to *str*:

$$S(\mathrm{t}, str) = \{e | t(e) = t \wedge s(e) = str\}$$

- computing for each set *S(t,str)* a score,
- selecting the entity that belongs to the set that has the maximum score.

Therefore, the provided method for identifying the named entity that corresponds to the owner of a web page, does not depend on a particular named entity recognition model.

Additionally, the provided method does not depend on language-specific resources and can be applied to a wide range of Web pages and does not assume having any information about the names *a priori.*

Moreover, such a method can be used with any particular method that detects the named entities with the required granularity, that is, given names, last names and middle names.

According to the present invention, in a method referred as a baseline 1 method, the score of a set *S(t,str)* may be substantially equal to 0 if *t* is not a *PERSON,* and is otherwise equal to a weight $w_{1,str}$ that is the sum of confidence's entities that belong to *S(PERSON,str)*, denoted *S(str)*.

$$w_{1,str} = \sum_{e \in S(str)} c(e)$$

Moreover, in a method referred as a baseline 2 method, the score of a set *S(t,str)* may be substantially equal to 0 if *t* is not a *PERSON,* and is otherwise equal to a weight $w_{2,str}$ that is

$$w_{2,str} = \sum_{e \in S(str)} w_a anchor(e) + w_t title(e) + w_c c(e)$$

where anchor(e)=1 if s(e) occurs in the said anchor text of incoming hyperlinks of the said web page, otherwise anchor(e)=0, title(e)=1 if s(e) occurs in the web page title, otherwise title=0 and where $w_a$, $w_t$ and $w_c$ are given parameters. The parameters $w_a$, $w_t$ and $w_c$ control the significance of each of the three features and are set during the training.

Advantageously, the Name Entity Recognizer may be based on a supervised learning of a cascaded Conditional Random Filed (CRF), the CRF being learned to recognize a name of a person as well as a first (*FNAME*), middle (*MNAME*) and a last (*LNAME*) name of the said person.

Advantageously, in a method referred as a graph method, the said step of computing a score may comprise a step of:

- defining a directed graph $G = \{V,E\}$ where $V$ is a set of vertexes and $E$ is a set of directed edges, each set $S(t,str)$ being an element of $V$, a directed edge of type $i$ to $S(t,str)$ being an element of $E$ is denoted by $in_i(t,str)$ and:

  - an edge of type 1 connects a set $S(t,str1)$ to a set $S(PERSON, str2)$ when $t \in \{FNAME, MNAME, LNAME\}$ and the string $str1$ is an included in the string $str2$;
  - an edge of type 2 connects a set $S(t,str1)$ to a set $S(t,str2)$ when $t \in \{FNAME, MNAME, LNAME\}$ and the string $str1$ is an abbreviated form of the string $str2$;
  - an edge of type 3 connects a set $S(PERSON, str1)$ to a set $S(PERSON, str2)$ when the string $str1$ is an abbreviated for of the string $str2$;

    and in that the said score of a set $S(t,str)$ is substantially equal to 0 if $t$ is not a *PERSON*, and is otherwise equal to a weight $w_{3,str}$ that is

$$w_{3,str} = \sum_{e \in S(str)} w_a anchor(e) + w_t title(e) + w_c c(e) + \sum_{S(str') \in in_i(str)} w_{str'}$$

    where anchor(e)=1 if s(e) occurs in the said anchor text of incoming hyperlinks of the said web page, otherwise $anchor(e) = 0$, $title(e) = 1$ if s(e) occurs in the web page title, otherwise $title = 0$ and where $w_a$, $w_t$ and $w_c$ are given parameters.

Advantageously, in a method referred as a classification method, the said step of computing a score may comprise a step of resolving a classification problem which input is $X = \{x \in (URL, S(PERSON, str))\}$ where URL is a home page.

Advantageously, $S(PERSON, str)$ may comprise a set of features including all or part of following features:

- a graph-based score of $S(PERSON, str)$
- the rank of $S(PERSON, str)$ when all sets of PERSON entities are ordered in ascending order of the said baseline 1 method, baseline 2 method and graph-based scoring functions
- the sum of the ranks for each $S(PERSON, str)$,
- the sum of the cardinalities of the sets corresponding to vertices linking to $S(PERSON,str)$ for each type of links,
- 1 if str appears in an email address occurring in the text of home page identified by URL, otherwise 0,
- 1 if str appears to be emphasized in the text of home page identified by URL 0.

In one embodiment, the all or part of parameters $w_a$, $w_t$ and $w_c$ may be set during a training step.

For the purpose of illustrating the invention, there is shown in the drawings a method and a form that are presently preferred; it being understood, however, that this invention is not limited to the precise arrangements and instrumentalities.

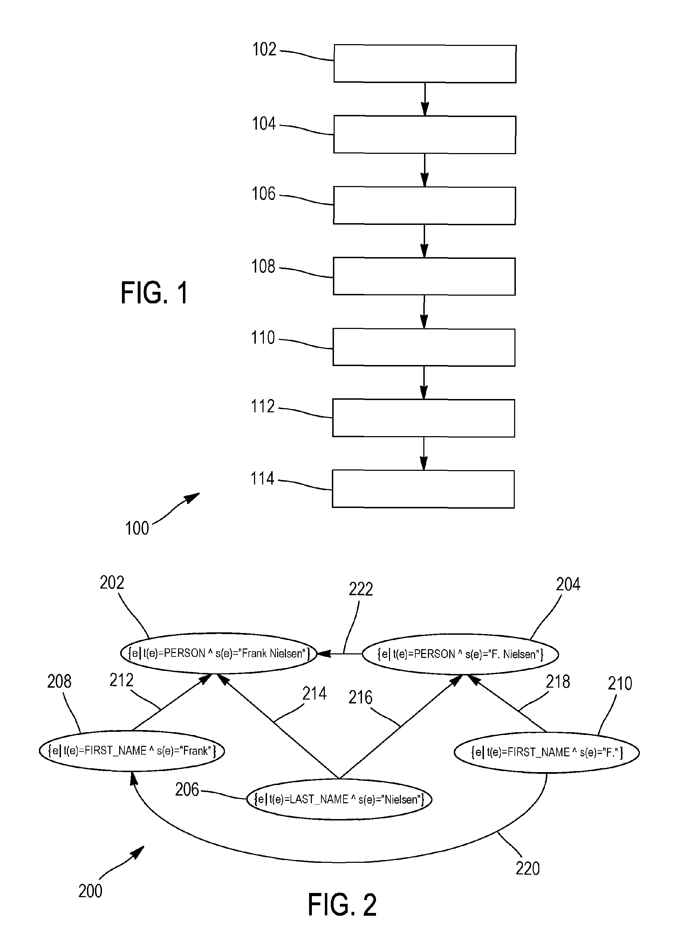

Figure 1 illustrates a preferred embodiment of a method 100 of the invention.

A Named Entity Recognizer (NER) system based on supervised learning of a Conditional Random Filed (CRF) is developed to learn to recognize full names of persons, as well as their first, middle and last names. This NER system provides a better granularity than existing NER system such as the Stanford Named Entity Recogniser as it identifies first, last and middle names in addition to full name. Moreover, the developed NER system process input in multiple language in addition to English. Hence, it is developed as language-independent features based on the form of tokens and the link structure of Web pages.

The method 100 comprises a first step 102 during which a CRF model is trained by manually annotating names in a hundred of Web pages. The textual content of a Web page is split in sentences using a DOM tree and regular expressions. Then, each sentence is tokenized in a language-independent way, by splitting tokens at non-alphanumeric characters, and tokens are annotated. The begin, inside, outside (BIO) convention is used to annotate the tokens.

At step 104 which occurs after step 102, a user sends to a remote server, connected to the Internet, a URL of a Web page to be analysed by the said remote server. The said Web page is downloaded by the said remote server. Then, a framework for weighting named entities is applied on the Web page. A set $S(t, str)$ is defined as being a set of entities $e$ of type $t$ and string representation $s(e)$ equal to $str$:

$$S(\mathrm{t}, str) = \{e | t(e) = t \wedge s(e) = str\}$$

The CRF models is applied to label tokens, consecutive tokens with B and I labels are aggregated in an entity $e$. For each entity $e$, $t(e)$ is the type of the entity where $t(e) \in \{PERSON, FNAME, MNAME, LNAME\}$, $c(e)$ is the average confidence of the label assignment over the entity's tokens, and $s(e)$ is the concatenation of the tokens to form the string representation $str$ of $e$.

The CRF language being language and domain independent, the learnt model can be applied to any Web page to identify names.

A step 106 occurs after step 104. A method referred as a baseline 1 method, is applied. Baseline 1 is a simple way to weight a set $S(\mathrm{t}, str)$ of type t=PERSON entities with the same string representation. This simple way is to sum the confidence c(e) of the label assignment for each entity $e \in S(str)$. Therefore the score of a set $S(t, str)$ is substantially equal to 0 if $t$ is not a *PERSON,* and is otherwise equal to a weight $w_{1,str}$ that is the sum of confidence's entities that belong to $S(PERSON, str) = S(str)$:

$$w_{1,str} = \sum_{e \in S(str)} c(e)$$

A step 108 occurs after step 106. A method referred as a baseline 2 method is applied. The weighting of a set is improved by incorporating more information regarding the position of the occurrences of entities. In that second method, the score of a set $S(t, str)$ is substantially equal to 0 if $t$ is not a *PERSON,* and is otherwise equal to a weight $w_{2,str}$ that is

$$w_{2,str} = \sum_{e \in S(str)} w_a \, anchor(e) + w_t \, title(e) + w_c \, c(e)$$

where anchor(e)=1 if s(e) occurs in the said anchor text of incoming hyperlinks of the said web page, otherwise anchor (e)=0, title(e)=1 if s(e) occurs in the web page titles, otherwise title=0 and where $w_a$, $w_t$ and $w_c$ are given parameters. The parameters $w_a$, $w_t$ and $w_c$ control the significance of each of the three features and are set during the training.

A step 110 occurs after step 108. A method referred as a graph method, is applied. A directed graph $G = \{V, E\}$ where $V$ is a set of vertexes and $E$ is a set of directed edges is defined. Each set $S(t, str)$ being an element of $V$, a directed edge of type $i$ to $S(t, str)$ being an element of $E$ is denoted by $in_i(t, str)$ and:

- an edge of type 1 connects a set $S(t, str1)$ to a set $S(PERSON, str2)$ when t ∈ {*FNAME, MNAME, LNAME*} and the string $str1$ is included in the string $str2$;
- an edge of type 2 connects a set $S(t, str1)$ to a set $S(t, str2)$ when $t \in \{FNAME, MNAME, LNAME\}$ and the string $str1$ is an abbreviated form of the string $str2$;
- an edge of type 3 connects a set $S(PERSON, str1)$ to a set $S(PERSON, str2)$ when the string $str1$ is an abbreviated for of the string $str2$;

The score of a set $S(t, str)$ is substantially equal to 0 if t is not a *PERSON,* and is otherwise equal to a weight $w_{3,str}$ that is

$$w_{3,str} = \sum_{e \in S(str)} w_a anchor(e) + w_t title(e) + w_c c(e) + \sum_{S(str') \in in_i(str)} w_{str'}$$

where anchor(e)=1 if s(e) occurs in the said anchor text of incoming hyperlinks of the said web page, otherwise *anchor* (*e*) = 0, *title*(*e*) = 1 if s(e) occurs in the web page title, otherwise *title* = 0 and where $w_a$, $w_t$ and $w_c$ are given parameters. A graph defined by this method is a directed acyclic graph.

As in the method referred to baseline 2 method, the parameters $w_a$, $w_t$ and $w_c$ control the importance of each of the three features and are set during the training.

A step 112 occurs after step 110. Baseline 1 and 2 and graph-based methods will produce a score for the entities, even when the named entity of the owner of the Web page is not among the identified named entities.

Therefore, a method referred as a classification method, is applied at step 112. The classification method investigates the problem of selecting the named entities as a binary classification problem in a supervised learning setting.

In particular, the classification problem $y(x) \in \{-1,1\}$ is formulated as $x \in X = \{x \in (URL, S(PERSON, str))\}$. The input *x* is a pair of a URL and a set *S(PERSON, str)*. For the output, *y(x)* = 1 when the named entities in (*PERSON, str*) correspond to the owner of the Web page with URL, otherwise, *y(x)* = -1. Ten features are computed for each input point *x*:

- a graph-based score of *S(PERSON, str)*, from the said graph-base method,
- the rank of *S(PERSON, str)* when all sets of PERSON entities are ordered in ascending order of the said baseline 1 method, baseline 2 method and graph-based scoring functions (3 features),
- the sum of the ranks for each *S(PERSON, str)*,
- the sum of the cardinalities of the sets corresponding to vertices linking to *S(PERSON, str)* for each type of links (3 features),
- 1 if str appears in the anchor text of incoming hyperlinks of home page identified by URL, otherwise 0,
- 1 if str appears to be emphasized in the text of home page identified by URL 0.

The features are normalized between -1 and +1 on a per home page basis. The employed classifier is an SVM with radial-basis kernel. For a given home page identified by a URL, the SVM may classify as +1 one or more pairs (*URL, S(PERSON, str)*). When there are more than one pair labelled as +1, the set with the highest estimated probability computed by the SVM classifier is selected.

A step 114 occurs after step 112. The selected set of step 112 is send to the user. Therefore, the user knows the owner of the Web page linked to the URL.

Figure 2 illustrates a graph 200 constructed by the graph-based method from a set of identified named entities. The graph has two vertexes 202 and 204 of type PERSON, one vertex 206 of type LAST_NAME for the last name 'Nielsen' and two vertices 208 and 210 respectively of type FIRST_NAME for the first name 'Frank' and its abbreviated form 'F'. There are four edges 212, 214, 216 and 218 of type 1, linking the vertices of type FIRST_NAME and LAST_ NAME to the corresponding vertices of type PERSON. There is one edge 220 of type 2 that links the vertex S(FIRST_ NAME, 'F.') to the vertex S(FIRST_NAME, 'Frank'). Finally, there is one edge 222 of type 3 from S('F. Nielsen') to S ('Frank Nielsen') because both vertexes have incoming links from the same vertex S(LAST_NAME, 'Nielsen') and there is a type 2 edge 220 between two of their FIRST_NAME linking vertices.

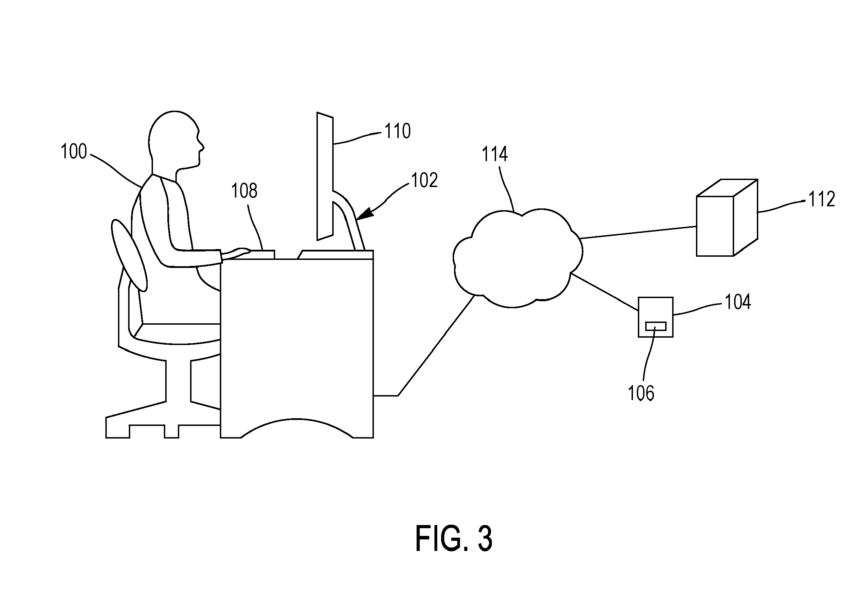

A form of use of the present invention is illustrated by figure 3. A user 300 uses a computer 302. The user 300 wants to know to who belongs a given web page 304. The web page 304 has a URL 306. The computer 302 is connected to the Internet network 314. By using a keyboard 308 and a screen 310 connected to the computer 302, the user interacts with a server 312 that is connected to the Internet network 314. The server 312 comprises means for processing data. A method as the one illustrated by figure 1 is processed by the processing means. The result of this method is the name page owner of the web page 104 related to the URL 106.

## Claims

1. Method for identifying the name of an owner of a web page, the said method comprising the steps of:

- applying a named entity recognizer (NER) to extract names appearing on the said web page and creating entities *e* that are of a type *t(e)* where *t(e)* ∈ {*PERSON, FNAME, MNAME, LNAME*}, that are of a confidence *c* (*e*) and that have a string representation *s(e)*,
- defining sets *S(t, str)* to be sets of entities *e* of type *t* and string representation *s(e)* equal to *str*:

$$S(\mathrm{t}, str) = \{e \mid t(e) = t \land s(e) = str\}$$

- computing for each set $S(t, str)$ a score,
- selecting the entity that belongs to the set that has the maximum score.

**2.** Method according to claim 1, referred as a baseline 1 method, **characterized in that** the said score of a set $S(t, str)$ is substantially equal to 0 if $t$ is not a *PERSON,* and is otherwise equal to a weight $w_{1,str}$ that is the sum of confidence's entities that belong to $S(PERSON, str) = S(str)$ :

$$w_{1,str} = \sum_{e \in S(str)} c(e)$$

**3.** Method according to claim 1, referred as a baseline 2 method, **characterized in that** the said score of a set $S(t, str)$ is substantially equal to 0 if $t$ is not a *PERSON,* and is otherwise equal to a weight $w_{2,str}$ that is

$$w_{2,str} = \sum_{e \in S(str)} w_a anchor(e) + w_t title(e) + w_c c(e)$$

where anchor(e)=1 if s(e) occurs in the said anchor text of incoming hyperlinks of the said web page, otherwise anchor(e)=0, title(e)=1 if s(e) occurs in the web page title, otherwise title=0 and where $w_a$, $w_t$ and $w_c$ are given parameters.

**4.** Method according to any of preceding claims, **characterized in that** the name entity recognizer is based on a supervised learning of a cascaded Conditional Random Filed (CRF), the CRF being learned to recognize a name of a person as well as a first (*FNAME*), middle (*MNAME*) and a last (*LNAME*) name of the said person.

**5.** Method according to anyone of the preceding claims, referred as a graph method, **characterized in that** the said step of computing a score comprises a step of:

- defining a directed graph $G = \{V,E\}$ where $V$ is a set of vertexes and $E$ is a set of directed edges, each set $S(t, str)$ being an element of $V$, a directed edge of type $i$ to $S(t, str)$ being an element of E is denoted by $in_i(t, str)$ and:
- an edge of type 1 connects a set $S(t, str1)$ to a set $S(PERSON, str2)$ when $t \in \{FNAME, MNAME, LNAME\}$ and the string $str1$ is an included in the string $str2$;
- an edge of type 2 connects a set $S(t, str1)$ to a set $S(t, str2)$ when $t \in \{FNAME, MNAME, LNAME\}$ and the string $str1$ is an abbreviated form of the string $str2$;
- an edge of type 3 connects a set $S(PERSON, str1)$ to a set $S(PERSON, str2)$ when the string $str1$ is an abbreviated for of the string $str2$;
and **in that** the said score of a set $S(t, str)$ is substantially equal to 0 if $t$ is not a *PERSON,* and is otherwise equal to a weight $w_{3,str}$ that is

$$w_{3,str} = \sum_{e \in S(str)} w_a anchor(e) + w_t title(e) + w_c c(e) + \sum_{S(str') \in in_i(str)} w_{str'}$$

where anchor(e)=1 if s(e) occurs in the said anchor text of incoming hyperlinks of the said web page, otherwise *anchor*(e) = 0, *title*(e) = 1 if s(e) occurs in the web page title, otherwise *title* = 0 and where $w_a$, $w_t$ and $w_c$ are given parameters.

**6.** Method according any one of preceding claims, referred as a classification method, when dependent of claim 2, 3 and 5, **characterized in that** the said step of computing a score for comprises a step of resolving a classification problem which input is $X = \{x \in (URL, S(PERSON, str))\}$ where URL is a home page.

7. Method according to claim 6, **characterized in that** $S(PERSON, str)$ comprises a set of feature including all or part of following features:

- a graph-based score of $S(PERSON, str)$,
- the rank of $S(PERSON, str)$ when all sets of PERSON entities are ordered in ascending order of the said baseline 1 method, baseline 2 method and graph-based scoring functions
- the sum of the ranks for each $S(PERSON, str)$,
- the sum of the cardinalities of the sets corresponding to vertices linking to $S(PERSON, str)$ for each type of links,
- 1 if str appears in an email address occurring in the text of home page identified by URL, otherwise 0,
- 1 if str appears to be emphasized in the text of home page identified by URL 0.

8. Method according to any of the claims 3 to 7, **characterized in that** the all or part of said parameters $w_a$, $w_t$ and $w_c$ are set during a training step.

FIG. 1

FIG. 2

FIG. 3

EP 2 605 150 A1

**EP 2 605 150 A1**

Europäisches
Patentamt

European
Patent Office

Office européen
des brevets

# EUROPEAN SEARCH REPORT

Application Number

EP 11 30 6693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAHAR CHANGUEL ET AL: "Automatic Web Pages Author Extraction", 26 October 2009 (2009-10-26), FLEXIBLE QUERY ANSWERING SYSTEMS, SPRINGER BERLIN HEIDELBERG, BERLIN, HEIDELBERG, PAGE(S) 300 - 311, XP019132991, ISBN: 978-3-642-04956-9 * the whole document * | 1-8 | INV. G06F17/27 |
| A | Asif Ekbal ET AL: "Named Entity Recognition in Bengali: A Conditional Random Field Approach", Proceedings of the 3rd International Joint Conference on Natural Language Processing (IJCNLP 2008), 7 January 2008 (2008-01-07), pages 589-594, XP55028140, Hyderabad, India Retrieved from the Internet: URL:http://acl.eldoc.ub.rug.nl/mirror/I/I08/I08-2077.pdf [retrieved on 2012-05-24] * abstract * | 4 | |
| A | HOANG-QUYNH LE ET AL: "An Integrated Approach Using Conditional Random Fields for Named Entity Recognition and Person Property Extraction in Vietnamese Text", ASIAN LANGUAGE PROCESSING (IALP), 2011 INTERNATIONAL CONFERENCE ON, IEEE, 15 November 2011 (2011-11-15), pages 115-118, XP032087200, DOI: 10.1109/IALP.2011.37 ISBN: 978-1-4577-1733-8 * abstract * | 4 | TECHNICAL FIELDS SEARCHED (IPC) G06F |

-/--

The present search report has been drawn up for all claims

| Place of search | Date of completion of the search | Examiner |
|---|---|---|
| Munich | 25 May 2012 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**EUROPEAN SEARCH REPORT**

Application Number

EP 11 30 6693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI WEI ET AL: "Rapid development of hindi named entity recognition using conditional random fields and feature induction", ACM TRANSACTIONS ON ASIAN LANGUAGE INFORMATION PROCESSING, ASSOCIATION FOR COMPUTING MACHINERY, NEW YORK, NY, US, vol. 2, no. 3, 1 January 2003 (2003-01-01), pages 290-294, XP002415945, ISSN: 1530-0226, DOI: 10.1145/979872.979879 * abstract * | 4 | |

TECHNICAL FIELDS
SEARCHED      (IPC)

The present search report has been drawn up for all claims

| Place of search | Date of completion of the search | Examiner |
|---|---|---|
| Munich | 25 May 2012 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document